**Europäisches Patentamt**

**European Patent Office**

**Office européen des brevets**

(11) Veröffentlichungsnummer : **0 470 363 B1**

## (12) EUROPÄISCHE PATENTSCHRIFT

(45) Veröffentlichungstag der Patentschrift :
26.01.94 Patentblatt 94/04

(51) Int. Cl.$^5$ : **G11B 5/708**

(21) Anmeldenummer : **91110909.8**

(22) Anmeldetag : **02.07.91**

(54) **Magnetband mit Schleifmittel.**

Die Akte enthält technische Angaben, die nach dem Eingang der Anmeldung eingereicht wurden und die nicht in dieser Patentschrift enthalten sind.

(30) Priorität : **12.07.90 DE 4022221**

(43) Veröffentlichungstag der Anmeldung :
**12.02.92 Patentblatt 92/07**

(45) Bekanntmachung des Hinweises auf die Patenterteilung :
**26.01.94 Patentblatt 94/04**

(84) Benannte Vertragsstaaten :
**DE FR GB**

(56) Entgegenhaltungen :
**DE-A- 3 203 601**

(56) Entgegenhaltungen :
**DE-A- 3 211 779**
**DE-A- 3 215 056**
**DE-A- 3 217 209**
**DE-A- 3 934 477**

(73) Patentinhaber : **BASF Magnetics GmbH**
**Dynamostrasse 3**
**D-68165 Mannheim (DE)**

(72) Erfinder : **Koller, Albrecht, Dr.**
**Raidingerstrasse 27/I**
**W-8000 München 70 (DE)**
Erfinder : **Credner, Hans-Heinrich, Dr.**
**Steinberg 7**
**W-8021 Hohenschaeftlarn (DE)**

(74) Vertreter : **Karau, Wolfgang, Dr. et al**
**BASF Aktiengesellschaft, Patentabteilung**
**ZDX - C 6**
**D-67056 Ludwigshafen (DE)**

EP 0 470 363 B1

## Beschreibung

Die Erfindung betrifft ein Magnetband mit Schleif- und Reinigungswirkung für die die Magnetschicht berührenden Teile der Magnetbandcassette und des Aufzeichnungs-/Wiedergabegeräts, bestehend aus einem nichtmagnetischen Schichtträger und einer darauf aufgebrachten Dispersionsschicht, welche harte magnetische Pigmente sowie unmagnetische Pigmente enthält, welche eine mittlere Teilchengröße unter 2 μm haben sowie polymere Bindemittel und gegebenenfalls weitere Zusätze wie Dispergatoren, Härtungsmittel, Weichmacher und Gleitmittel.

Wenn ein magnetischer Aufzeichnungträger, beispielsweise ein Magnetband, während einer längeren Zeitdauer verwendet wird, entsteht Abrieb, welcher sich auf der Oberfläche des Magnetkopfes aufbaut. Auch Staub der äußeren Umgebung kann sich auf dem Magnetkopf aufbauen und diesen zusetzen. Diese Ablagerung ist eine Ursache von verringerter Audio- und Video-Qualität, die unter anderem zu einem Pegelabfall bei der Aufzeichnung und Wiedergabe führt. Eine weitere Ursache für den Pegelabfall ist die sogenannte head degradation. Diese beruht auf der Umwandlung der im wesentlichen einkristallinen Magnetkopf-Oberfläche in einen polykristallinen Zustand infolge Spannungsbeeinflussung durch das darübergezogene Magnetband.

Bei der Herstellung von Magnetbändern ist es allgemeines Entwicklungsziel, den Anteil unmagnetischen Materials in der Speicherschicht so klein wie möglich zu halten, um die magnetischen Eigenschaften nicht zu beeinträchtigen.

Bei der Verwendung magnetischer Eisenoxide - eventuell mit Kobalt dotiert - als Speicherpartikel sprechen jedoch zwei Gründe dafür, neben dem polymeren Bindemittel, welches zur Einbindung der magnetischen Pigmente und für das mechanische Laufverhalten des Magnetbandes nötig ist, auch zusätzlich unmagnetische Pigmente einzusetzen:

- die Abriebfestigkeit der Magnetschicht ist häufig erst durch Zusatz solcher unmagnetischer Pigmente zufriedenstellend
- insbesondere bei Verwendung des Magnetbandes für Video-Aufzeichnung ist die Mohs'sche Härte der magnetischen Eisenoxide nicht ausreichend, um die nötige ständige, aber geringe Politur der aus Ferrit bestehenden Video-Magnetköpfe zu gewährleisten. Die Zufügung harter Schleifkörper zur Schichtrezeptur gestattet es, einen wünschenswerten geringen und gleichmäßigen Kopfabschliff einzustellen, der für den guten magnetischen Kontakt zwischen Band und Kopf sorgt. Entsprechende Rezepturen sind aus den Veröffentlichungen DE-A-12 87 633, 31 23 832 sowie 39 10 488 bekannt.

Bei der Verwendung magnetischer Pigmente aus $CrO_2$ ergibt sich der gegensätzliche Fall, daß durch die große Mohs'sche Härte dieses Pigments die Gefahr eines zu hohen Kopfabschliffs durch das magnetische Pigment selbst besteht. Dieser Gefahr versucht man durch den Einsatz relativ weicher anorganischer Pigmente wie ZnO und/oder verbesserte Umhüllung der magnetischen Pigmente mit organischem Material zu begegnen, wie beispielsweise aus den Transactions on Magnetics, Vol.-Mag. 23, Nr. 1, Januar 1987, Seite 103 - 105, bekannt. Auch die Oberflächenvergütung des Magnetbands durch Kalandrierung kann steuernd eingesetzt werden, um den gewünschten geringen Kopfabschliff einzustellen. Unter diesem Gesichtspunkt ist der Einsatz harter unmagnetischer Pigmente bei Verwendung von $CrO_2$ problematisch. Aus der DE-A-25 54 146 ist ein Verfahren zum Reinigen der Magnetköpfe eines Video-Aufzeichnungsgerätes mit einem Video-Monitor bekannt, wobei das magnetische Pigment $CrO_2$ ist, dem als unmagnetisches Pigment $Al_2O_3$ welches bekanntlich einen Moh's-Wert von 9 besitzt, beigefügt ist. Auf ein entsprechend hergestelltes Magnetband wird ein Video-Testbild aufgezeichnet, und dieses Band wird in das zu reinigende Gerät eingesetzt und solange abgespielt, bis die Bildwiedergabe ausreichend ist. An diesem Punkt muß das Gerät sofort angehalten werden, und man nimmt die Testcassette heraus. Es leuchtet ein, daß dieses Verfahen äußerst kritisch ist und bei nicht fachgerechter Ausführung zu einer Verkratzung der Video-Köpfe führt. Dieses Magnetband besitzt einen Ra-Wert von 0,05 bis 0,12 μm, ist also für Gebrauchszwecke als Videoband viel zu rauh.

Weiterhin sind aus den Veröffentlichungen DE-A-27 51 135 sowie 31 24 395 Reinigungsbänder für die magnetischen Aufzeichnungsköpfe bekannt, welche kein magnetisches Pigment, sondern anorganische Pigmente mit unterschiedlicher Härte sowie unterschiedlichem Teilchendurchmesser aufweisen beziehungsweise Mischungen von anorganischen und organischen Polymerpulvern.

Unabhängig davon hat sich gezeigt, daß nicht nur beim Videokopf eine gewisse Politur wünschenswert ist. Auch bei anderen die Magnetschicht berührenden Teilen, vor allem der Videocassette ist ein partieller Abschliff sinnvoll, da Rauhigkeitsspitzen dieser Teile beispielsweise Bandführungselemente beziehungsweise Bandumlenkelemente die berührende Magnetschicht beschädigen können, was zu sichtbaren und hörbaren Störungen bei der Wiedergabe führt.

Die Beseitigung solcher Rauhigkeitsspitzen kann jedoch, wie sich aus Untersuchungen ergeben hat, nicht durch die magnetischen Pigmente erfolgen, da diese der Signalspeicherung dienenden Pigmente sehr feinteilig sind, um die Störungen des Signals gering zu halten und eine hohe Aufzeichnungsdichte zu ermöglichen.

Solche feinteiligen magnetischen Pigmente vermögen bei ausreichender Härte an einem die Magnetschicht berührenden Cassettenteil sehr wohl eine Feinpolitur auszuführen; störende, beschädigende Rauhigkeitsspitzen werden jedoch erst nach sehr langer Laufstrecke des Bandes nennenswert geglättet, so daß unter Umständen eine Verkratzung der gesamten Bandlänge einer Videocassette erfolgt, was zu Funktionsbeeinträchtigungen führt, da wie bereits oben erwähnt, solche Längskratzer je nach Tiefe als lang dauernde sichtbare störende Querstreifen auf dem Bildschirm erscheinen.

Diese langwierige Feinpolitur wird zwar wie zu erwarten von den härteren $CrO_2$-Pigmenten schneller durchgeführt als von den weicheren Eisenoxidteilchen; der Vorgang ist jedoch bei beiden Pigmentarten viel zu langsam, so daß die Beschädigung langer Bandstrecken beim Bandtransport in der Videocassette nicht vermieden werden kann. Daher dürfen solche Pigmente nach dem bisher bekannten Stand der Technik nur in Verbindung mit gut vorgearbeiteten glatten die Magnetschicht berührenden Cassettenteilen eingesetzt werden, was eine entsprechende Verteuerung bei der Herstellung einer Videocassette zur Folge hat.

Daher bestand die Aufgabe, ein Magnetband der eingangs genannten gattungsmäßigen Art zu finden, welches eine selektiv auf Rauhigkeitsspitzen wirkende Abschliffaktivität erzeugt, ohne daß der Kopfabschliff der Video-Köpfe nennenswert ansteigt, wobei außerdem die magnetischen und mechanischen Eigenschaften des Magnetbandes keine Beeinträchtigung erfahren durften.

Es hat sich überraschend herausgestellt, daß ein Magnetband mit den im kennzeichnenden Teil des Anspruchs 1 genannten Merkmalen die Aufgabe vollständig löst. Weitere Einzelheiten der Erfindung gehen aus den Unteransprüchen, der Beschreibung und den Abbildungen hervor. Mit Hilfe der Erfindung ist es möglich, nach einer kurzen Laufstrecke des Magnetbandes alle bandberührenden störenden Rauhigkeitsspitzen gezielt bis zum Verschwinden der Störung zu entfernen, wobei jedoch die Wirkung der zusätzlichen Schleifkörper gegenüber glatten Kontaktflächen (Video-Kopf, Umlenkstift nach Entfernung der Rauhigkeitsspitze) gegenüber der flächenhaften Feinpolitur durch die magnetischen $CrO_2$-Teilchen nicht ins Gewicht fällt. Die Erfindung beinhaltet also einen selbstregelnden Prozeß, der nach der Entfernung der Störstelle zu einem selbsttätigen Abschluß kommt und in dieser Form nicht erwartet werden konnte.

Durch Zusatz von geeigneten unmagnetischen Pigmenten, wie weiter unten im Detail geschildert, wird es somit möglich, harte magnetische Pigmente vom $CrO_2$-Typ, die beispielsweise besonders für die thermische Schnellduplizierung von Videoprogrammen interessant sind, auch in Verbindung mit preisgünstigen Cassettenteilen wie metallischen Umlenkstiften mit grober Oberflächenstruktur zu verwenden, was für die Endverbraucher störungsfreie Bilder und für die Cassettenhersteller wirtschaftliche Vorteile zur Folge hat.

Selbstverständlich muß darauf geachtet werden, daß beim Zusatz der unmagnetischen Pigmente keine groben Teilchen in die Magnetschicht gelangen, da sonst Verkratzungen der Video-Köpfe eintreten. Auch eine übersteigerte Feinteiligkeit der unmagnetischen Pigmente muß vermieden werden, um den selektiven Abschliffvorgang nicht zu behindern.

Außerdem hat sich gezeigt, daß mit dem erfindungsgemäßen Magnetband bei unterschiedlichen Magnet-Köpfen sowohl für Audio- wie für Video-Magnetaufzeichnungsgeräte bei unterschiedlichen Formaten (3,81 mm, 1/4-Zoll, 8 mm, 1/2-Zoll, Betacam, R-DAT, 1-Zoll, 2-Zoll) eine ausgezeichnete Reinigungswirkung ohne die Gefahr von Kopfverkratzen erreicht werden konnte. Die Erfindung wird nun im einzelnen dargestellt und an Beispielen erläutert, ohne jedoch die Erfindung darauf zu beschränken.

Die Dispersion wird an sich in bekannter Weise hergestellt. Als magnetisches Pigment wird vorzugsweise $CrO_2$, welches eine Moh's-Härte von ungefähr 8 hat, eingesetzt. Die Koerzitivkraft ist vorzugsweise größer als 25 kA/m, der BET-Wert beträgt mindestens 26 m²/g.

Selbstverständlich können im Rahmen der Erfindung auch andere harte magnetische Pigmente wie beispielsweise nadelförmiges Eisencarbid oder Eisennitrid eingesetzt werden, ebenso auch Mischungen dieser Pigmente mit $CrO_2$. Diese Pigmente sind beispielsweise aus den Veröffentlichungen DE-A-35 12 270, DE-A-36 34 283, 36 34 487 sowie EP-A-0 312 032, EP-A-0 340 689 und EP-A-0 227 104, bekannt.

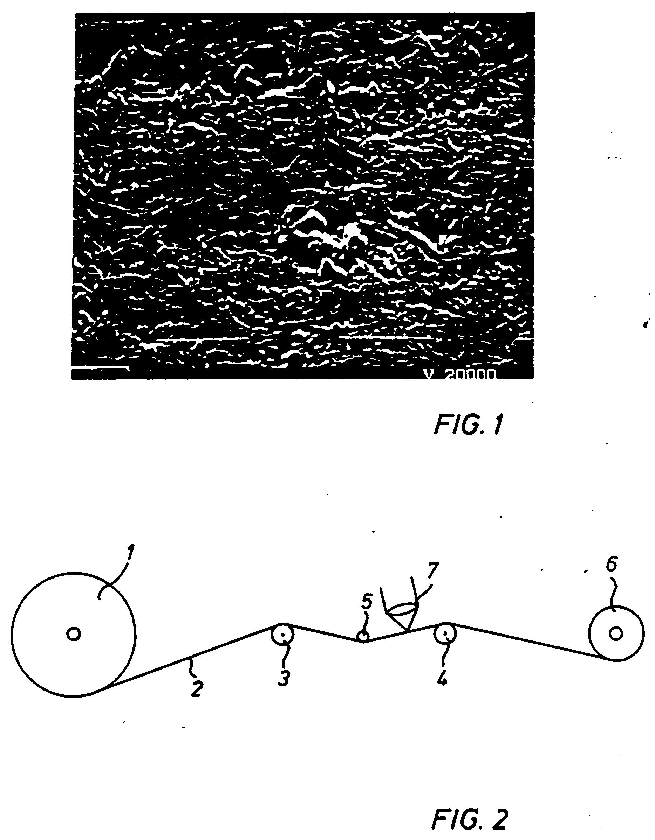

Als sogenannte harte Schleifkörper können anorganische unmagnetische Pigmente mit einer Moh's-Härte von mindestens 9 eingesetzt werden, beispielsweise $Al_2O_3$ oder Chromgrün, $Cr_2O_3$. Diese Pigmente haben eine Primärteilchengröße von 0,1 bis 2 μm, vorzugsweise unter 1 μm und eine BET-Oberfläche von 1 - 130 m²/g, vorzugsweise 5 - 25 m²/g. Ebenfalls erfindungsgemäß einsetzbar sind SiC, Granat oder $SiO_2$-Teilchen. Als besonders geeignet im Rahmen der Erfindung hat sich ein würfelförmiges Aluminiumoxidpigment mit der mittleren Primärteilchengröße von 0,3 μm erwiesen. Die Abbildung 1 zeigt eine Rasterelektronenmikroskop-Aufnahme mit 20 000facher Vergrößerung, in der deutlich zu erkennen ist, wie die würfelförmigen unmagnetischen Pigmente in der Magnetschicht, welche nadelförmige Chromdioxidteilchen enthält, eingebettet sind.

Als polymere Bindemittel sind die üblichen, in der Magnetband-Technik verwendeten harten oder weichen Bindemittel oder Mischungen beider verwendbar, wie beispielsweise Copolymere aus Vinylchlorid, Vinylacetat und Vinylalkoholcopolymere aus Vinylidenchlorid und Acrylnitril, Polyvinylacetale wie beispielsweise Polyvinylformal oder Cellulosederivate wie Nitrocellulose sowie Phenoxyharze und Epoxyharze, weiterhin Polyesterpolyurethane, Polyetherpolyurethane, Polycarbonatpolyurethane und andere.

Als Lösungsmittel für das Bindemittel können die üblichen aus dem Stand der Technik bekannten organischen Flüssigkeiten verwendet werden wie beispielsweise Tetrahydrofuran, Dioxan, Dimethylformamid, Cyclohexanon, Methylethylketon, Toluol, Methylisobutylketon und andere, gegebenenfalls auch in Mischung miteinander.

Dispergierhilfsmittel können aus einer Vielzahl bekannter oberflächenaktiver Verbindungen ausgewählt werden, wie zum Beispiel Fettsäureamine oder -diamine, Fettsäureamide oder -diamide, Fettsäuren beziehungsweise deren Ammoniumsalze, Lecithine, ethoxylierte Fettsäurederivate, aliphatische oder aromatische gegebenenfalls ethoxylierte Phosphorsäureester, Sulfobernsteinsäureester, Sorbitanester, aliphatische und aromatische Sulfonsäuren oder Sulfonate, Fettalkoholsulfate und andere mehr.

Als weitere Zusätze können Weichmacher, Gleitmittel und Härtungsmittel wie Diisocyanate sowie Härtungsbeschleuniger, wie sie aus dem Stand der Technik bekannt sind, für die Herstellung der magnetischen Aufzeichnungsschicht verwendet werden.

Die Beschichtung der magnetischen Dispersion kann an einem Rakel-Gießer, Extruder-Gießer oder Kaskaden-Gießer erfolgen, die Trockenschichtdicke der Magnetschicht beträgt vorzugsweise 2 bis 10 µm.

Als unmagnetische Schichtträger können Folien aus Polyester, Polyolefine, Cellulosederivate oder Polycarbonate eingesetzt werden. Nach der Beschichtung wird in üblicher Weise die Dispersion getrocknet, worauf eine Oberflächenglättung durch Kalandrieren erfolgt. Dabei wird der beschichtete und getrocknete Schichtträger zwischen zwei Walzen, beispielsweise einer beheizten Metallwalze und einer Kunststoffwalze, unter erhöhtem Druck und einer Oberflächentemperatur von 70 bis 105 °C hindurchgezogen. Anschließend wird das so hergestellte Magnetband auf die benötigte Gebrauchsbreite geschnitten und gegebenenfalls in eine Cassette konfektioniert.

In den nachfolgenden Beispielen beinhalten alle Angaben Gewichtsteile. Die magnetischen Dispersionen werden gemäß den Mengenangaben in der Tabelle 1 in einem Dispergierkessel mit einem Turbomischer vordispergiert und anschließend in Rührwerkskugelmühlen, die mit Keramik-Mahlkörpern von 1 bis 1,5 mm Durchmesser gefüllt sind, gemahlen. Anschließend werden die einzelnen Dispersionen mit einer Bindemittellösung der nachfolgenden Zusammensetzung vereinigt und filtriert. Nach Zugabe einer Vernetzerlösung von 3,5 Teilen Diisocyanat (Desmodur L der Bayer AG), 0,1 Teilen Eisenacetonylacetonat gelöst in 6 Teilen Tetrahydrofuran werden die magnetischen Dispersionen in einem Extrudergießer auf einen 15 µm dicken Schichtträger aus Polyethylenterephthalat mit einer Trockenschichtdicke von 2,5 µm vergossen, in einem Magnetfeld in Gießrichtung längs ausgerichtet, getrocknet und kalandriert.

Bindemittellösung

| | |
|---|---|
| Lösungsmittel | |
| Tetrahydrofuran | 100 |
| Cyclohexanon | 16 |
| Gleitmittel | |
| Stearinsäure | 6 |
| Butylstearat | 9 |
| Bindemittel | |
| Polyesterurethan | 15 |
| Polyvinylchlorid-vinylacetat-vinylalkohol-copolymer (VAGH) | 4 |

Als unmagnetisches anorganisches Pigment wurde in den Beispielen 1, 2, 4, 5, 6 und 8 Al$_2$O$_3$-Pigmente der Fabrikationsbezeichnung P10 feinst mit der mittleren Teilchengröße von 0,7 µm, Hersteller Alkor Chemie GmbH Ludwigshafen, verwendet, bei den Beispielen 3 und 7 wurden Al$_2$O$_3$-Teilchen der Fabrikationsbezeichnung GE6, mittlere Primärkorngröße 0,3 µm der Firma Baikowski Chimie, Annecy (Frankreich) eingesetzt.

Tabelle 1

| Beispiel | 1 | 2 | 3 | 4 | 5 | 6 | 7 | 8 | Vergleichs-beispiel 1 | Vergleichs-beispiel 2 |
|---|---|---|---|---|---|---|---|---|---|---|
| **Lösungsmittel** | | | | | | | | | | |
| Tetrahydrofuran | 86 | 86 | 86 | 86 | 86 | 86 | 86 | 86 | 86 | 86 |
| Cyclohexanon | 13 | 13 | 13 | 13 | 13 | 13 | 13 | 13 | 13 | 13 |
| **Dispergator** | | | | | | | | | | |
| Lecithin | 2,5 | 2,5 | 2,5 | 2,5 | 2,5 | 2,5 | 2,5 | 2,5 | 2,5 | 2,5 |
| **Pigmente** | | | | | | | | | | |
| Chromdioxid | 91 | 91 | 91 | 90 | 107 | 107 | 107 | 105 | 91 | 107 |
| $\gamma$-$Fe_2O_3$ | 16 | 16 | 16 | 15 | -- | -- | -- | -- | 16 | -- |
| $Al_2O_3$ (P10 feinst) | 1 | 2 | -- | 4 | 1 | 2 | -- | 4 | -- | -- |
| $Al_2O_3$ (GE 6) | -- | -- | 3 | -- | -- | -- | 2 | -- | -- | -- |
| **Bindemittel** | | | | | | | | | | |
| Polyvinylchlorid-vinylacetat-vinylalkohol | 3 | 3 | 3 | 3 | 3 | 3 | 3 | 3 | 3 | 3 |

Zur Prüfung der magnetischen und mechanischen Eigenschaften werden die Materialien auf 1/2-Zoll Breite (12,5 mm) getrennt und in 2-Stunden-VHS-Cassetten einkonfektioniert, die Bandlänge ist dabei 173 m.

Folgende Prüfungen wurden durchgeführt:

1. Messung der speichertechnischen Daten wie beim VHS-System üblich

2. Messung des Kopfabschliffes nach 50 Durchläufen unter normalen klimatischen Eigenschaften in der Cassette

3. Prüfung des Verhaltens des Magnetbandes gegenüber billigen Cassettenumlenkstiften.

Diese Prüfung wurde, wie anhand der Figur 2 erkennbar, wie folgt durchgeführt. Von einer Abwickelrolle (1) wurde das zu prüfende Magnetband (2) durch zwei Umlenkrollen (3, 4) unter definiertem Zug über einen bereits erwähnten Umlenkstift (5), der einer käuflichen Billigcassette entnommen wurde, mit seiner Magnetschichtseite geführt und auf einer Aufwickelrolle (6) aufgewickelt, die Bandgeschwindigkeit betrug 5 mm/Sekunde. Mit Hilfe eines Stereomikroskopes (7), das zwischen Umlenkstift (5) und Rolle (4) senkrecht auf die Schichtseite gerichtet wurde, wurde bei tangentialer quer zum Band gerichteter Beleuchtung visuell beobachtet, nach welcher Bandlänge die Störungen verschwanden. Parallel dazu wurden in einer Videocassette, welche billige Umlenkstifte aus dem gleichen Material enthielten, anhand eines aufgezeichneten Testsignals ermittelt, wann die Störungen auf einem Fernsehschirm nicht mehr erkennbar sind.

Tabelle 2

| | Signal-/Rausch-Abstand | | Ende der Band-verletzung nach | Kopfabschliff |
| | dB | dBrel | m | µm |
|---|---|---|---|---|
| Beispiel 1 | 52,3 | 0,2 | 1,6 | 3,4 |
| " 2 | 52,2 | 0,1 | 0,9 | 3,8 |
| " 3 | 52,0 | 0,2 | 1,1 | 3,3 |
| " 4 | 51,9 | -0,2 | 0,6 | 4,0 |
| " 5 | 53,0 | 0,9 | 1,2 | 4,4 |
| " 6 | 52,8 | 0,7 | 1,0 | 4,9 |
| " 7 | 52,6 | 0,6 | 1,2 | 4,3 |
| " 8 | 52,7 | 0,6 | 0,7 | 5,3 |
| Vergleichs-Beispiel 1 | 52,1 | 0 | > 173 | 3,4 |
| Vergleichs-Beispiel 2 | 53,0 | 0,9 | > 173 | 4,5 |

Wie aus der Tabelle 2 ersichtlich ist, verschwinden bei den erfindungsgemäßen Beispielen 1 bis 8 die Störungen bereits nach Ablauf einer kurzen Bandlänge, während sie bei den Vergleichsbeispielen 1 und 2 über die volle Bandlänge bestehen bleiben. Die Korrelation zwischen visuell mit dem Mikroskop beobachteten Kratzern und den auf dem Fernsehschirm beobachteten Störungen war ausgezeichnet. Wie weiterhin aus der Tabelle 2 sich ergibt, verursacht der Zusatz von 1 bis 4 % Aluminiumoxid

- keine Verschlechterung des Luminanz-Signal-Rausch-Abstandes
- Kopfabschliffwerte, die innerhalb der VHS-Spezifikation von 0,5 bis 6 µm pro 100 Stunden Laufzeit liegen
- jedoch eine signifikante Verbesserung des Bildeindruckes bei Verwendung billiger Cassetten-Umlenkstifte, das heißt eine rasche Behebung der durch Schichtkratzer verursachten Bildstörungen.

Die mittlere Rauhigkeit der Magnetschichtseite (Ra-Wert) lag sowohl bei den Magnetbändern gemäß den Beispielen 1 bis 8 wie auch bei den Vergleichsbeispielen 1 und 2 zwischen 0,005 bis 0,015 µm und damit im Rahmen eines handelsüblichen Magnetbandes für Videoaufzeichnungen.

Erfindungsgemäß geeignet sind Beimengungen des harten unmagnetischen Pigments von 0,5 bis 10 Gewichtsprozent bezogen auf das magnetische Pigment, bevorzugt 1 - 4 Gewichtsprozent.

## Patentansprüche

1. Magnetband mit Schleif- und Reinigungswirkung für die die Magnetschicht berührenden Teile der Magnetbandcassette und des Aufzeichnungs-/Wiedergabegeräts, bestehend aus einem nichtmagnetischen Schichtträger und einer darauf aufgebrachten magnetischen Schicht, welcher harte magnetische Pigmente sowie nichtmagnetische Pigmente mit einer mittleren Teilchengröße unter 2 µm sowie polymere Bindemittel und gegebenenfalls weitere Zusatzstoffe wie Dispergatoren, Härtungsmittel, Weichmacher und Gleitmittel enthält, wobei die magnetische Schicht des Magnetbandes einen Ra-Wert von kleiner als 0,02 µm hat, dadurch gekennzeichnet, daß das magnetische Pigment nadelförmiges $CrO_2$ mit einem BET-Wert von mindestens 26 $m^2/g$ und/oder nadelförmiges Eisencarbid und/oder Eisennitrid ist und daß das unmagnetische Pigment eine Moh's-Härte von mindestens 9 sowie eine Primarkorngröße von 0,1 bis 2 µm und einen BET-Wert von 1 bis 130 $m^2/g$ besitzt.

2. Magnetband nach 1, dadurch gekennzeichnet, daß als unmagnetisches Pigment $Al_2O_3$ oder $Cr_2O_3$ mit einer Primärkorngröße unter 1 µm und mit einem BET-Wert von 5 bis 25 $m^2/g$ in einer Menge von 0,5 bis 10 Gew.% bezogen auf das magnetische Pigment eingesetzt wird.

3. Magnetband nach Anspruch 1, dadurch gekennzeichnet, daß das unmagnetische Pigment würfelförmiges $Al_2O_3$ ist.

## Claims

1. A magnetic tape having an abrasive and cleaning action for those parts of the magnetic tape cassette and of the recording/playback apparatus which come into contact with the magnetic layer, consisting of a non-magnetic substrate and, applied thereon, a magnetic layer which contains hard magnetic pigments and nonmagnetic pigments having a mean particle size of less than 2 µm and polymeric binders and, if required, further additives, such as dispersants, curing agents, plasticizers and lubricants, the magnetic layer of the magnetic tape having a center line average value of less than 0.02 µm, wherein the magnetic pigment is acicular $CrO_2$ having a BET value of at least 26 $m^2/g$ or acicular iron carbide or iron nitride, and the nonmagnetic pigment has a Moh's hardness of at least 9, a primary particle size of from 0.1 to 2 µm and a BET value of from 1 to 130 $m^2/g$.

2. A magnetic tape as claimed in claim 1, wherein $Al_2O_3$ or $Cr_2O_3$ having a primary particle size of less than 1 µm and a BET value of from 5 to 25 $m^2/g$ is used as the nonmagnetic pigment, in an amount of from 0.5 to 10 % by weight, based on the magnetic pigment.

3. A magnetic tape as claimed in claim 1, wherein the nonmagnetic pigment is a cube-shaped $Al_2O_3$.

## Revendications

1. Bande magnétique à action abrasive et nettoyante pour les parties de la cassette de bande magnétique et de l'appareil d'enregistrement-lecture qui touchent la couche magnétique, constituée d'un substrat non magnétique et d'une couche magnétique appliquée sur celui-ci qui contient des pigments magnétiques et des pigments non magnétiques durs ayant une grosseur moyenne de particules inférieure à 2 µm, des liants polymères et éventuellement des adjuvants tels qu'agents dispersants, agents de durcissement, plastifiants et lubrifiants, la couche magnétique de la bande magnétique ayant un Ra inférieur à 0,02 µm, caractérisée par le fait que le pigment magnétique est du $CrO_2$ aciculaire ayant une aire massique B.E.T. d'au moins 26 $m^2/g$ et/ou du carbure de fer et/ou du nitrure de fer aciculaire(s), et que le pigment non magnétique a une dureté Mohs d'au moins 9, une grosseur de grains primaires de 0,1 à 2,0 µm et une aire massique B.E.T. de 1 à 130 $m^2/g$.

2. Bande magnétique selon la revendication 1, caractérisée par le fait qu'elle contient comme pigment non magnétique de l'$Al_2O_3$ ou du $Cr_2O_3$ ayant une grosseur de grains primaires inférieure à 1 µm et une aire massique B.E.T. de 5 à 25 m²/g, dans une proportion de 0,5 à 10 % en poids par rapport au pigment magnétique.

3. Bande magnétique selon la revendication 1, caractérisée par le fait que le pigment non magnétique est de l'$Al_2O_3$ cubique.

*FIG. 1*

*FIG. 2*